# EUROPÄISCHE PATENTSCHRIFT

(11) **EP 3 018 315 B1**
(45) Veröffentlichungstag und Bekanntmachung des Hinweises auf die Patenterteilung: **29.08.2018**
(21) Anmeldenummer: 15193604.4
(22) Anmeldetag: 09.11.2015
(51) Int. Cl.: F01N 13/18, F01N 13/20, F01N 3/28

(54) **KATALYSATOREINRICHTUNG FÜR EINE STATIONÄRE BRENNKRAFTMASCHINE**
CATALYST DEVICE FOR A STATIONARY COMBUSTION ENGINE
DISPOSITIF CATALYSEUR POUR UN MOTEUR A COMBUSTION INTERNE FIXE

(30) Priorität: 10.11.2014 AT 508232014
(43) Veröffentlichungstag der Anmeldung: 11.05.2016
(73) Patentinhaber: GE Jenbacher GmbH & Co OG, 6200 Jenbach (AT)
(72) Erfinder: Hillen, Friedhelm, 6200 Jenbach (AT); Url, Michael, 85375 Neufahrn (DE); Mehring, Max, 6260 Bruck am Ziller (AT); Sieberer, Manfred, 6336 Lankampfen (AT); Manickam, Bhuvaneswaran, 6240 Rattenberg (AT)
(74) Vertreter: Torggler & Hofinger Patentanwälte

(56) Entgegenhaltungen:
- EP-A2- 1 367 233
- DE-A1- 3 825 958
- DE-A1-102005 056 423
- DE-A1-102011 079 785
- JP-A- S5 471 766
- JP-A- S5 484 868
- JP-A- S62 121 638
- JP-A- S62 191 026
- US-A1- 2004 009 874

## Beschreibung

Die Erfindung betrifft eine Anordnung wenigstens einer stationären Brennkraftmaschine mit wenigstens einer Katalysatoreinrichtung.

Zur Einhaltung der Emissionsgrenzwerte werden Brennkraftmaschinen häufig mit Abgasnachbehandlungsanlagen ausgerüstet, welche die im Abgas enthaltenen Schadstoffe durch chemisch-physikalische Prozesse auf das zulässige Maß reduzieren.

Insbesondere stationäre Brennkraftmaschinen, wie sie beispielsweise für die dezentrale Stromerzeugung häufig eingesetzt werden, weisen oft aufwendige Abgasnachbehandlungsanlagen zur Reduktion der Emissionen an Ruß (engl. *particulate matter,* PM), unverbrannnten Kohlenwasserstoffen (engl. *unburned hydrocarbons,* HC), Kohlenmonoxid (CO) und Stickoxiden (NOx) auf. Für die Abscheidung von Ruß werden meist Filter eingesetzt, für die Reduktion der Spezies HC, CO, NOx und gegebenenfalls anderer chemisch umsetzbarer Substanzen kommen Katalysatoreinrichtungen zum Einsatz.

Abgasnachbehandlungsanlagen für stationäre Brennkraftmaschinen werden aus wirtschaftlichen Gründen stets auf die gegenwärtig einzuhaltenden Grenzwerte ausgelegt.

Nachteilig an den aus dem Stand der Technik bekannten Lösungen ist es, dass bei späterer Verschärfung der Grenzwerte, etwa durch den Gesetzgeber, die Anlagen meist von Grund auf geändert werden müssen.

Die US 2014/0178263 A1 zeigt eine Katalysatoreinrichtung, welche in der gezeigten kompakten Ausführung nur für Dieselmotoren einsetzbar ist. Es ist eine Eindüsvorrichtung für ein Reduktionsmittel vorgesehen (BZ: 152), welche Eindüsvorrichtung innerhalb der Katalysatoreinrichtung angeordnet ist.

Aus den Schriften DE 199 21 263 A1 und EP 1 367 233 A2 gehen Katalysatoreinrichtung mit einer extrem hohen Zelldichte hervor, welche in dieser Form nur bei mobilen Anwendungen, nicht jedoch bei stationären Brennkraftmaschinen, einsetzbar sind, da bei stationären Brennkraftmaschine der Druckabfall zu groß wäre.

Aus der DE 10 2008 043 726 A1 geht eine gattungsgemäße Anordnung hervor, bei welcher eine Eindüsvorrichtung etwa mittig in einer Abgasleitung, mit einer schräg zur axialen Richtung ausgerichteten Düse gezeigt ist. Diese Wahl funktioniert nur bei Wahl eines Ammoniaks als Reduktionsmittel, könnte jedoch nicht bei der Wahl eines zweistoffigen Reduktionmittels, beispielsweise einer mit Luft vermischten Harnstofflösung, zur Anwendung kommen, weil das zweistoffige Reduktionmittel gegen die Wandung des Abgasrohres prallen würde.

Die US 2015 / 0247438 A1 zeigt eine Katalysatoreinrichtung, in der eine Vielzahl von Plattenkatalysatoren aufeinander gestapelt sind. Treten Druckpulsationen oder Druckspitzen auf kann es zu einer Verschiebung einzelner oder mehrerer Plattenkatalysatoren in Richtung des Abgasstromes kommen.

Die US 2004/0009874 A1, die JP S54 71766 A, die JP S62 121638 A, die JP S54 84868 A, die JP S62 191026 A und die DE 38 25 958 A1 offenbaren jeweils Katalysatoreinrichtungen mit mehreren Substratblöcken.

In der US 2010/0115932 A1 wird eine Zweistoff-Eindüsvorrichtung offenbart.

Die DE 10 2011 079785 A1 offenbart ein Kraftfahrzeugmotorsystem mit einer SCR-Filter-Einrichtung mit einer Zelldichte von 300 cpsi.

Die DE 10 2005 056 423 A1 offenbart eine Brennkraftmaschine für ein Nutzfahrzeug mit V-förmig angeordneten Zylinderbänken, wobei die Abgaskanäle jeweils einer Zylinderbank in ein gemeinsames Zylinderrohr münden.

Die EP 1 367 233 A2 offenbart eine Vorrichtung zur Reduzierung von im Abgas enthaltenen Rußpartikeln eines Fahrzeugdieselmotors mit konischen Abschnitten, wobei in einem konischen Abschnitt eine Einrichtung zur Erfassung des Abgasgegendruckes vorgesehen ist.

Die Aufgabe der Erfindung ist es, eine Anordnung von wenigstens einer stationären Brennkraftmaschine mit wenigstens einer Katalysatoreinrichtung anzugeben, die besonders kompakt, also platzsparend ist.

Gelöst wird diese Aufgaben durch eine Anordnung nach Anspruch 1.

Erfindungsgemäß ist die Brennkraftmaschine der Anordnung als stationärer Gasmotor ausgebildet.

Hinsichtlich der Anordnung ist vorgesehen, dass die wenigstens eine Eindüsvorrichtung stromabwärts der wenigstens einen Abgasturbine und stromaufwärts der wenigstens einen Katalysatoreinrichtung angeordnet ist.

Es ist vorgesehen, dass die wenigstens eine Eindüsvorrichtung stromaufwärts des wenigstens einen Schalldämpfers angeordnet ist.

So kann eine besonders kompakte Anordnung erzielt werden, da die nachgeschaltete Rohrleitung und der Schalldämpfer als Mischstrecke für das Reduktionsmittel dienen.

Dadurch dass das Katalysatorsubstrat eine Zellendichte in cpsi von wenigstens 50 cpsi, vorzugsweise größer 100 cpsi, aufweist, kann eine besonders kompakte Bauweise realisiert werden. Weil die Zelldichte kleiner als 350 cpsi, bevorzugt kleiner als 300 cpsi, beträgt, ist das Auftreten eines zu großen Druckabfalls bei einer stationären Brennkraftmaschine ausgeschlossen.

Die Einheit cpsi (cells per square inch) ist üblich zur Charakterisierung von Katalysatorsubstraten hinsichtlich ihrer Zelldichte. Ebenfalls geeignet ist die Beschreibung über die Zahl der Zellen pro inch (cells per inch, cpi). Dem Fachmann ist es geläufig, bei Kenntnis der Querschnittsform der Zellen die Einheiten umzurechnen.

Die Wahl der für stationäre Anwendungen unüblich hohen Zelldichten erlaubt eine gegenüber dem Stand der Technik verkürzte Bauform.

Die hohe Zelldichte bewirkt eine große Oberfläche mit zusätzlich erhöhter Turbulenz, was synergistisch zu verringertem notwendigen Bauraum führt.

Die Erfindung erlaubt es, eine Katalysatoreinrichtung für eine stationäre Brennkraftmaschine nachzurüsten, wobei das Nachrüsten einer Abgasnachbehandlungsanlage mit dieser Katalysatoreinrichtung unter Beibehaltung des bestehenden Bauraumes erleichtert ist.

Es ist es vorgesehen, dass der Abgasstrom in einer Abgasleitung führbar ist, welche zumindest einen sich stromabwärts aufweitenden konischen Abschnitt aufweist, wobei die wenigstens eine Eindüsvorrichtung im konischen Abschnitt angeordnet ist und wobei der konische Abschnitt unmittelbar stromabwärts der wenigstens einen Abgasturbine angeordnet ist.

Die Eindüsung des Reduktionsmittels im sich erweiternden Abschnitt eines konischen Bereiches der Abgasleitung hat sich als besonders günstig für die Durchmischung des Reduktionsmittels mit dem Abgas erwiesen.

Für die Durchmischung kann es förderlich sein, dass die Eindüsvorrichtung derart nahe am wenigstens einen Turbolader platziert ist, dass ein dem Abgasstrom durch den Turbolader aufgeprägter Restdrall die Vermischung des eingedüsten Reduktionsmittels und des Abgasstromes unterstützt.

Der Restdrall hat daneben noch den Vorteil, einen Aufprall des eingedüsten Reduktionsmittels auf die Wandung des Abgasrohres - gleichsam einem Schild - zu verhindern.

Bevorzugt kann vorgesehen sein, dass das Katalysatorsubstrat zumindest vorwiegend, vorzugsweise vollständig, metallisch ist. Der besondere Vorteil der bei der Verwendung von metallischen Katalysatorsubstraten besteht darin, dass keine Wärmespannungen zwischen dem Rahmen und dem Substrat auftreten, da beide Komponenten hinsichtlich Ihres Wärmeausdehnungskoeffizienten angepasst sind.

Besonders bevorzugt kann vorgesehen sein, dass das Katalysatorsubstrat im Gehäuse in Form einer Vielzahl von Substratblöcken angeordnet ist.

Als besonders günstig hat sich herausgestellt, dass die Substratblöcke in ihrer Einbaulage untereinander lösbar miteinander verbunden und zueinander gasdicht abgedichtet sind, vorzugsweise über formschlüssige Verbindungen.

Bevorzugt kann vorgesehen sein, dass die formschlüssigen Verbindungen in Form von Verbindungsschienen ausgeführt sind, welche in einem im Gehäuse der Katalysatoreinrichtung angeordneten Rahmen einhängbar sind.

Der besondere Vorteil der Anordnung der Substratblöcke in Verbindungsschienen besteht darin, dass eine Abdichtung der Seitenflächen der Substratblöcke ohne zusätzliche Dichtmittel allein durch das Eigengewicht der Substratblöcke und die Wahl der geeigneten Toleranzen gewährleistet ist.

Der besondere Vorteil des Rahmens, in den die Substratblöcke einhängbar sind, besteht darin, dass der gleiche Rahmen für Substratblöcke verschiedener Tiefe verwendet werden kann. Es könnte beispielsweise Anwendungen geben, die einen Katalysator größerer Länge erfordern. Dann bietet der Rahmen ebenfalls die Möglichkeit, andere Dimensionen von Substratblöcken einzuhängen.

Bei dem erfindungsgemäßen Ausführungsbeispiel kann vorgesehen sein, die Substratblöcke an einem Rahmen zu lagern, welcher selbst mit einem Gehäuse der Katalysatoreinrichtung fest verbunden ist. Dies verhindert negative Auswirkungen von Druckpulsationen oder Druckspitzen auf die Substratblöcke. Kommt es beispielsweise zu Druckstößen und sind die Substratblöcke nur in einem gemeinsamen Gehäuse aufeinander gestapelt, könnte es zu einem Verschieben einzelner oder mehrerer Substratblöcke in Richtung des Abgasstromes kommen.

Bevorzugt kann vorgesehen sein, dass die Substratblöcke quaderförmig sind.

Es kann vorgesehen sein, die Substratblöcke zumindest jeweils eine Koppelstelle, vorzugsweise eine Ausnehmung, zur Ankopplung eines Hebemittels aufweisen. Die Koppelstelle ermöglicht ein Anheben und Platzieren der Substratblöcke durch Ankopplung eines Hebemittels. Dies erlaubt eine sichere Handhabung und verhindert eine Beschädigung der Substratblöcke.

Besonders bevorzugt dient die Katalysatoreinrichtung zur selektiven katalytischen Reduktion, also als SCR-Katalysator. Das eingangs beschriebene Szenario einer Nachrüstung einer Abgasnachbehandlungsanlage kann insbesondere durch eine Verschärfung der NOₓ-Grenzwerte ausgelöst werden. Durch die kompakte Bauweise der Katalysatoreinrichtung sowie der Anordnung erleichtert die Erfindung die Nachrüstung einer Abgasnachbehandlungsanlage mit einem SCR-Katalysator.

Die Katalysatoreinrichtung kann als SCR-Katalysator, als Oxidationskatalysator oder als NH3-Schlupf-Katalysator ausgeführt sein.

Die Katalysatoreinrichtung ist nicht auf einen Katalysator für die selektive katalytische Reduktion (englisch *selective catalytic reduction,* SCR) beschränkt, sondern ist auch auf einen Oxidationskatalysator anwendbar.

Ein SCR-Katalysator wandelt Stickoxide in der Gegenwart eines Reduktionsmittels, meist einer Harnstoff Lösung, in Stickstoff um.

Ein Oxidationskatalysator wird typischerweise für den Abbau von Kohlenmonoxid (CO) und von unverbrannten Kohlenwasserstoffen (*unburned hydrocarbons,* HC) eingesetzt. Das Katalysatorsubstrat wird natürlich für die jeweilige Aufgabe ausgewählt. So unterscheiden sich die Katalysatorsubstrate für oben genannte Aufgaben etwa in ihrer Beschichtung.

Im Falle von Oxidationskatalysatoren kann die Zelldichte noch größere Werte, beispielsweise von 400 cpsi annehmen.

Es kann vorgesehen sein, dass die Eindüsvorrichtung vorzugsweise als Zweistoff-Eindüsvorrichtung (Zweistoffdüse, Zweistofflanze) ausgebildet ist mit einem ersten Stoff in Form einer flüssigen Reduktionsmittellösung, bevorzugt einer Harnstofflösung, und einem zweiten Stoff in Form von Luft.

Es kann vorgesehen sein, dass zumindest zwei strömungstechnisch parallel angeordnete Abgasturbinen vorgesehen sind und die wenigstens eine Eindüsvorrichtung im Abgasstrom einer Sammelleitung stromabwärts der zumindest zwei Abgasturbinen angeordnet ist.

Diese Variante beschreibt den Fall, wo die Eindüsvorrichtung sich im Abgasstrom nach der Vereinigung der aus den Abgasturbinen führenden Abgasleitungen befindet.

Es kann vorgesehen sein, dass zumindest zwei strömungstechnisch parallel angeordnete Abgasturbinen vorgesehen sind und entweder nur im Abgasstrom einer der Abgasturbinen eine Eindüsvorrichtung angeordnet ist oder im Abgasstrom jeder der zumindest zwei Abgasturbinen jeweils zumindest eine Eindüsvorrichtung angeordnet ist. Diese Variante beschreibt den Fall, wo die Eindüsvorrichtung sich in dem Abgasstrom einer einzelnen Abgasturbine bzw. in den jeweiligen Abgasströmen der einzelnen Abgasturbinen angeordnet ist. In anderen Worten ist hier die Eindüsvorrichtung stromaufwärts einer die jeweiligen Abgasströme vereinenden Sammelleitung platziert.

Bevorzugt kann vorgesehen sein, dass der Abgasstrom in einer Abgasleitung führbar ist, welche zumindest einen gekrümmten Abschnitt aufweist, wobei die wenigstens eine Eindüsvorrichtung stromaufwärts des zumindest einen gekrümmten Abschnitts der Abgasleitung angeordnet ist.

Bevorzugt kann vorgesehen sein, dass im zumindest einen gekrümmten Abschnitt eine Ablenkvorrichtung, vorzugsweise ein Prallblech, in einer Eindüsrichtung der Eindüsvorrichtung angeordnet ist.

Die Eindüsung des Reduktionsmittels stromaufwärts eines gekrümmten Abschnittes der Abgasleitung, wobei im gekrümmten Abschnitt eine Ablenkvorrichtung, vorzugsweise ein Prallblech vorgesehen ist, hat sich als besonders günstig herausgestellt, da das Reduktionsmittel an der Ablenkvorrichtung rascher verdampft als es normalerweise im gekrümmten Abschnitt der Abgasleitung verdampfen würde. Weiters günstig ist es, dass die Ablenkvorrichtung einen Thermoschock durch das Aufprallen des relativ kühlen Reduktionsmittels auf die durch die Abgase aufgeheizte Abgasleitung reduziert bzw. vermeidet.

Bevorzugt ist vorgesehen, dass die Eindüsvorrichtung im Abgasrohr axial ausgerichtet und bevorzugt wenigstens annähernd mittig angeordnet ist. Dies kann das Auftreffen des eingedüsten Reduktionsmittels auf die Wandung des Abgasleitung verhindern. Ist diese Maßnahme in Kombination mit einem Anordnen der Eindüsvorrichtung derart nahe am Turbolader vorgesehen, dass der oben erwähnte Restdrall noch gegeben ist, fungiert der Restdrall auch als Fokussiermittel für das eingedüste Reduktionsmittel. Um die Ausbildung einer Rückströmung durch die Anordnung der Eindüsvorrichtung nahe am Turbolader zu verhindern, kann die Anordnung einer Strömungsleiteinrichtung (beispielsweise in Form eines Bleches oder Rohres) zwischen Turbolader und Eindüsvorrichtung vorteilhaft sein.

Vor der Katalysatoreinrichtung kann ein Strömungsgleichverteiler, zum Beispiel in Form eines Lochbleches, angeordnet sein.

Die Erfindung wird im Folgenden durch die Figuren näher erläutert.

Dabei zeigen
- Fig. 1: eine Katalysatoreinrichtung in einer perspektivischen Ansicht,
- Fig. 2a bis Fig. 2d: konstruktive Details der Katalysatoreinrichtung,
- Fig. 3: eine perspektivische Ansicht einer Anordnung umfassend eine Katalysatoreinrichtung
- Fig. 4: eine Anordnung gemäß einem ersten Ausführungsbeispiel,
- Fig. 5: eine Anordnung nach einem zweiten Ausführungsbeispiel und
- Fig. 6a bis Fig. 6c: Varianten der Durchströmung der Katalysatoreinrichtung
- Fig. 7a und 7b: weitere Varianten der Durchströmung der Katalysatoreinrichtung
- Fig. 8a bis 8c: schematische Darstellungen der Anströmung der Katalysatoreinrichtung
- Fig. 9: ein Detail der Abgasleitung

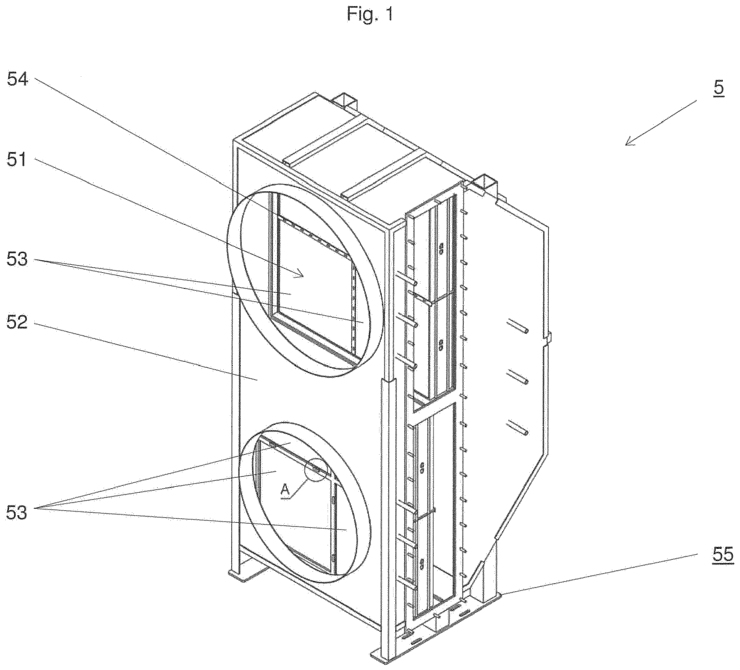

Figur 1 zeigt eine Katalysatoreinrichtung 5 in einer perspektivischen Ansicht. Das Gehäuse 52 ist hier eine quaderförmige Blechkonstruktion, in der das Katalysatorsubstrat 51 als Träger der eigentlichen katalytischen Reaktion angeordnet ist. Die kreisrunden Öffnungen, durch welche das Abgas in die Katalysatoreinheit 5 einströmen bzw. aus der Katalysatoreinheit 5 abströmen kann, geben den Blick auf den Aufbau frei.

Das Katalysatorsubstrat 51 ist in Form von Substratblöcken 53 bereitgestellt. Die Substratblöcke 53 sind über die formschlüssige Verbindung 54 miteinander verbunden. Die formschlüssigen Verbindungen 54 sind hier in Form von Verbindungsschienen ausgeführt. Die Substratblöcke 53 werden von den Verbindungsschienen in Position gehalten und gegeneinander abgedichtet. Besonders vorteilhaft ist die Variante, in der die Abdichtung der Seitenflächen der Substratblöcke ohne zusätzliche Dichtmittel allein durch das Eigengewicht der Substratblöcke und die Wahl der geeigneten Toleranzen gewährleistet ist. Die Katalysatoreinrichtung 5 weist weiters eine Konsole 55 auf, über welche die Katalysatoreinrichtung 5 montiert werden kann. In stationären Anwendungen erfolgt die Montage der Katalysatoreinrichtung 5 meist in stehender Position.

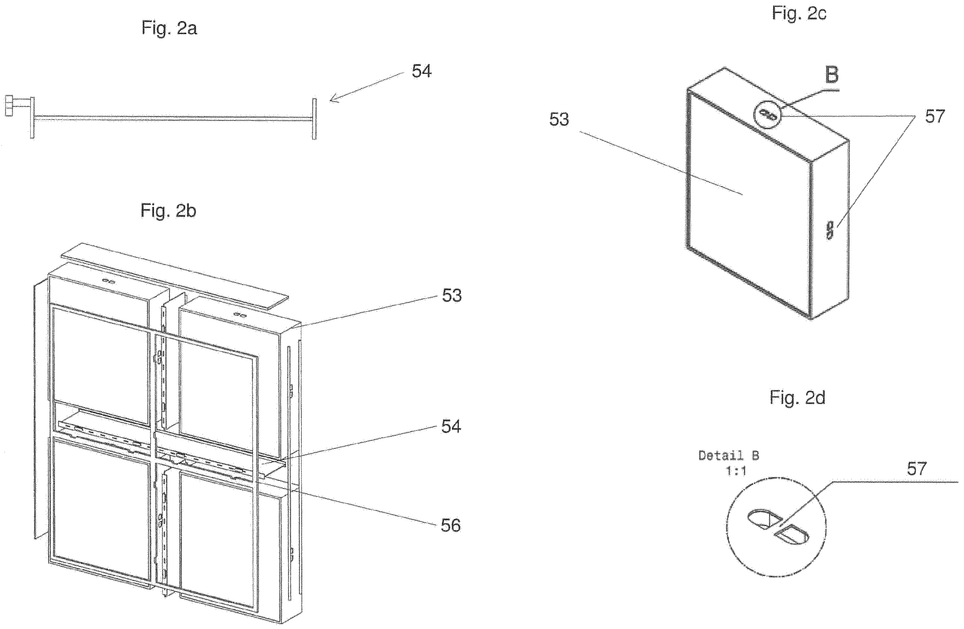

Figur 2a zeigt das Detail A von Figur 1 in einem Längsschnitt. Zu erkennen ist die formschlüssige Verbindung 54, welche die Substratblöcke 53 aufnehmen kann.

Figur 2b zeigt eine Explosionsdarstellung der Substratblöcke 53, der formschlüssigen Verbindung 54, hier in Form von Verbindungsschienen sowie des Rahmens 56. Man erkennt, wie die Substratblöcke 53 über die formschlüssige Verbindung 54 gehalten und anschließend der Zusammenbau von den Substratblöcken 53 mit der formschlüssigen Verbindung 54 in den Rahmen 56 eingehängt werden kann.

Figur 2c zeigt einen Substratblock 53 in einer perspektivischen Ansicht. Zu erkennen sind die Koppelstellen 57 (Detail B) an den Seitenflächen des Substratblockes 53.

Figur 2d zeigt die Koppelstelle 57 entsprechend Detail B aus der Figur 2. Die Koppelstelle 57 erlaubt ein sicheres Anheben und Ausrichten des Substratblockes 53.

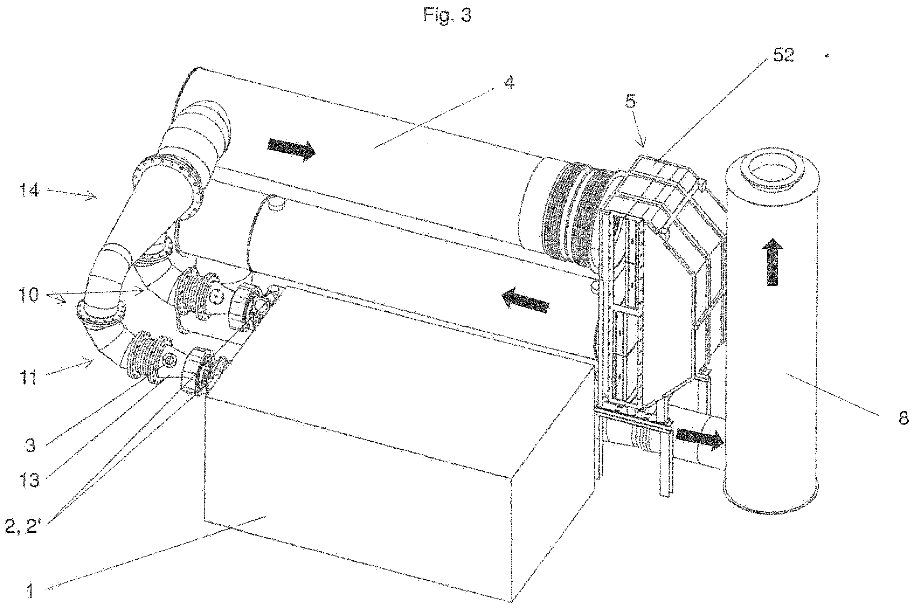

In Figur 3 ist eine perspektivische Ansicht eines Ausführungsbeispieles einer erfindungsgemäßen Anordnung zu sehen. Eine Brennkraftmaschine 1 ist mit zwei parallel geschalteten Abgasturbinen 2, 2' verbunden, hinter denen ein konischer Abschnitt 13 der Abgasleitung 10 angeordnet ist. Eine Eindüsvorrichtung 3 düst in den konischen Abschnitt 13 Reduktionsmittel ein. Dahinter weist die Abgasleitung 10 einen gekrümmten Abschnitt 11 mit integrierter Ablenkvorrichtung 12 (in dieser Ansicht nicht sichtbar) auf. Daran schließt sich eine Sammelleitung 14 an, welche in einen Schalldämpfer 4 mündet. Hinter dem Schalldämpfer 4 ist das Gehäuse 52 der Katalysatoreinrichtung 5 zu erkennen. Die Strömungsrichtung der Abgase ist durch fette schwarze Pfeile symbolisiert. Die Katalysatoreinrichtung 5 in diesem Ausführungsbeispiel bewirkt eine 180° Umlenkung der Abgase. Nachgeschaltet sind zwei Abgaswärmetauscher und ein Kamin 8 zur Ableitung der behandelten Abgase.

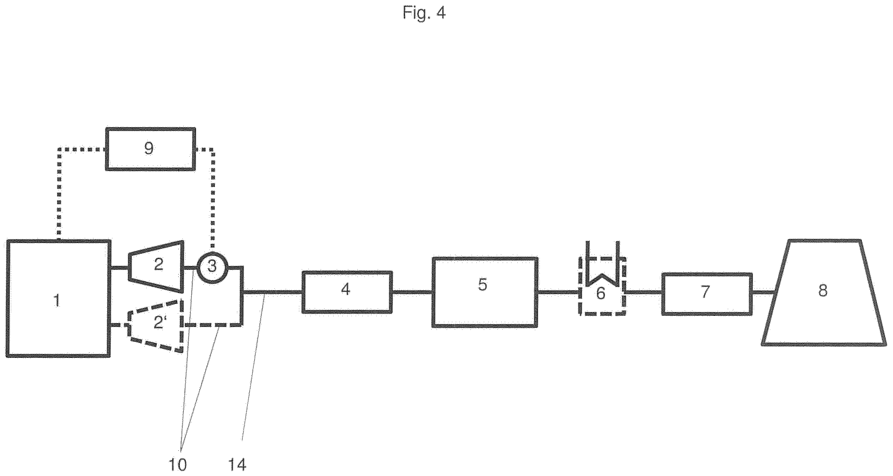

Figur 4 zeigt eine Anordnung mit einer Katalysatoreinrichtung 5 in einem ersten Ausführungsbeispiel. Im Abgasstrom der Brennkraftmaschine 1 sind in diesem Fall zwei parallel angeordnete Abgasturbinen 2, 2' vorgesehen. Das Abgas wird über die Abgasleitung 10 geführt. Die Eindüsvorrichtung 3 ist hier im Abgasstrom einer einzelnen Abgasturbine 2 angeordnet. Die Eindüsvorrichtung 3 wird über die Steuer/Regeleinrichtung 9 kontrolliert. Stromabwärts der Abgasturbinen 2, 2' folgt ein erster Schalldämpfer 4 und die Katalysatoreinrichtung 5. Nach der Katalysatoreinrichtung 5 ist ein Abgaswärmetauscher 6 vorgesehen, von dem die Abgase weiter durch den Endschalldämpfer 7 zum Kamin 8 geleitet werden. In einer Variante kann nach jeder der Abgasturbinen 2, 2' eine separate Eindüsvorrichtung 3 vorgesehen sein.

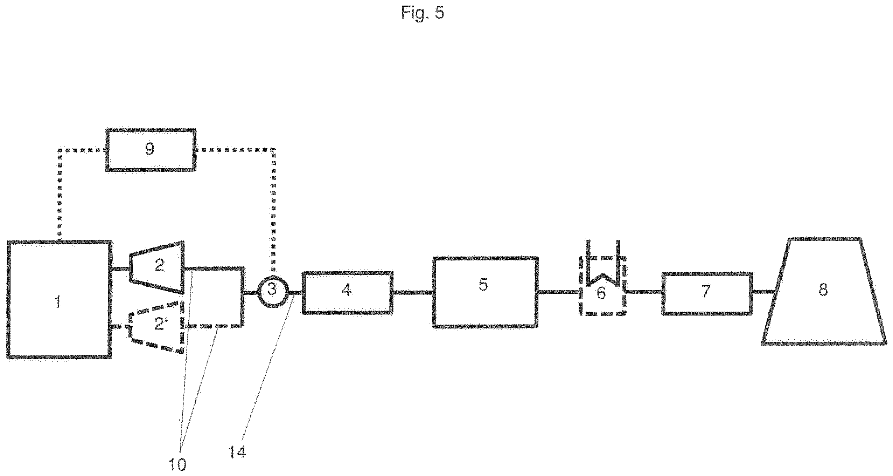

Figur 5 zeigt eine Anordnung einer Brennkraftmaschine 1 mit einer Katalysatoreinrichtung 5 nach einem zweiten Ausführungsbeispiel. Wie im vorherigen Ausführungsbeispiel sind auch hier zwei Abgasturbinen 2, 2' in paralleler Anordnung vorgesehen. Die Eindüsvorrichtung 3 jedoch befindet sich hier in einer Sammelleitung 14 nach Vereinigung der einzelnen Abgasleitungen 10 nach den Abgasturbinen 2, 2'. Ansonsten gleicht der Aufbau der Anordnung von Figur 5 dem Ausführungsbeispiel von Figur 4.

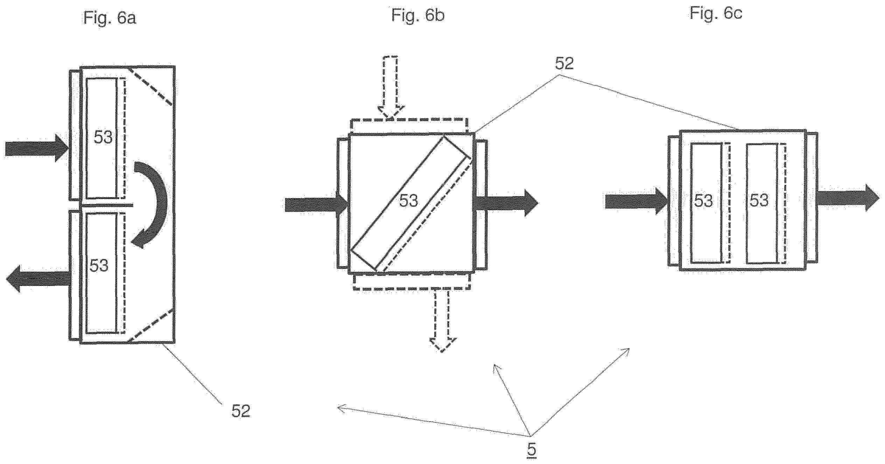

Figuren 6a bis Figuren 6c zeigen Varianten der Anströmung der Katalysatoreinrichtung 5 in Draufsichten. Die Strömungsrichtung des Abgases ist durch die schwarzen Pfeile symbolisiert.

In der Variante nach Figur 6a strömt das Abgas über eine Stirnseite in das Gehäuse 52 ein, durchströmt einen ersten Substratblock 53, wird umgelenkt und strömt durch einen weiteren Substratblock 53 auf der Eintrittsseite wieder aus. Diese Anordnung eignet sich besonders für bauliche Gegebenheiten, bei denen kein geradliniger Strömungspfad möglich ist. Die äußeren Abmessungen einer Abgasanlage mit einer Katalysatoreinrichtung 5 nach dieser Variante können besonders kompakt sein.

In der Variante nach Figur 6b strömt das Abgas durch eine vordere Stirnseite in das Gehäuse 52 ein und auf der Hinterseite wieder aus. Der Substratblock 53 ist diagonal schräg verbaut, wodurch sich eine gegenüber einer rechtwinkeligen Anströmung eine vergrößerte Anströmfläche des Substratblockes 53 ergibt. Mit strichlierten Pfeilen ist angedeutet, dass bei gleichem Gehäuse 52 weitere Variationen der Durchströmung realisierbar sind. So könnte in einer Abwandlung dieser Variante eine Ablenkung des Abgasstromes um 90° erfolgen.

Variante nach Figur 6c zeigt den Fall mit zwei seriell hintereinander geschalteten Substratblöcken 53. Wie bereits angedeutet, erlaubt das Gehäuse 52 zusammen mit Rahmen 56 (hier nicht gezeigt) eine modulare Gestaltung der Katalysatoreinrichtung 5.

Auch können die einzelnen Substratblöcke 53, wie dies durch die Strichlierung angedeutet ist, in Strömungsrichtung tiefer ausgebildet sein, da immer noch genug Bauraum im Gehäuse 52 verbleibt.

Erfordert es die Anwendung, so können beispielsweise mehrere Substratblöcke 53 in Serie angeordnet werden, ohne am Gehäuse 52 etwas ändern zu müssen.

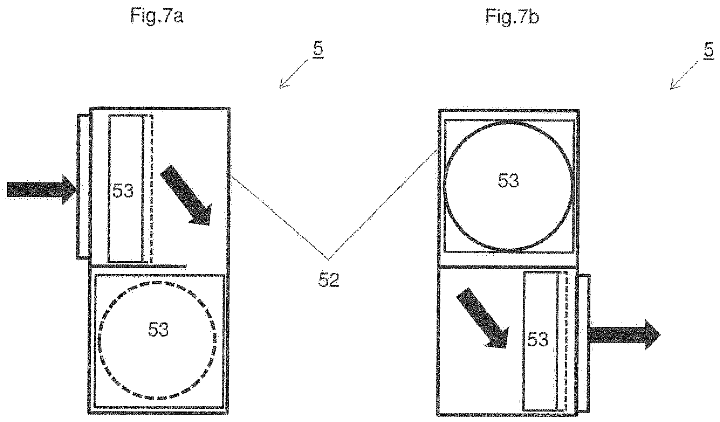

Figuren 7a und 7b zeigen eine weitere Variante der Anströmung der Katalysatoreinrichtung 5, wobei Figur 7a die Seitenansicht und 7b die Vorderansicht des gleichen Ausführungsbeispiels zeigen. Wie in Figur 7a zu sehen, strömt das Abgas in das hier hochkant konfigurierte Gehäuse 52 ein, wird nach unten und um 90° umgelenkt und verlässt das Gehäuse 52 wieder. Der strichlierte Kreis in 7a zeigt den Auslass aus dem Gehäuse. Der Auslass ist hier auf der Rückseite, das heißt nicht sichtbar und daher strichliert.

Figur 7b zeigt die Variante in der Vorderansicht.

Auch hier wäre eine Abwandlung vorstellbar, dass die Abgase 180° umgelenkt und in der gleichen Ebene wie der Anströmung abströmen.

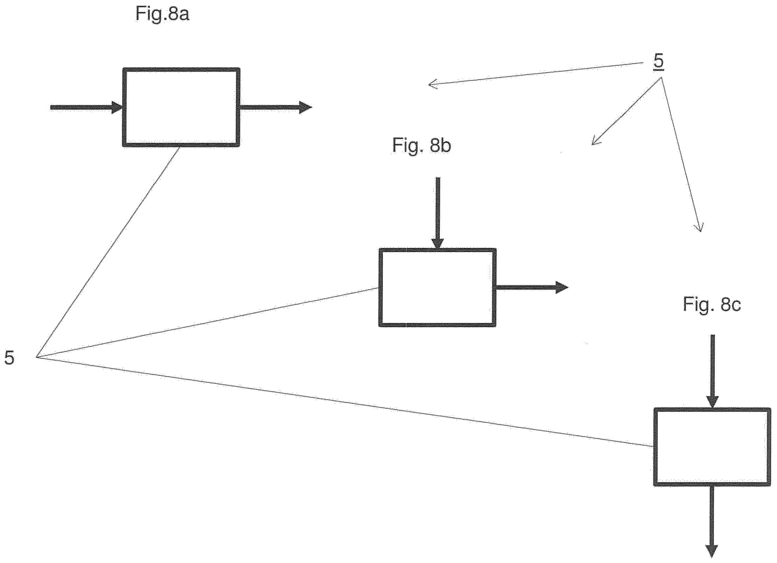

Figuren 8a bis 8c zeigen schematisch die oben diskutierten Varianten der Anströmung einer Katalysatoreinrichtung 5.

Gemäß der Darstellung von Figur 7a strömt das Abgas durch die Vorderseite der Katalysatoreinrichtung 5 ein und über die Hinterseite ab.

Die Variante nach Figur 8b zeigt den Fall, bei dem das Abgas über die Seitenfläche der Katalysatoreinrichtung 5 einströmt und über die stromabwärts gelegene Stirnfläche der Katalysatoreinrichtung 5 wieder abströmt.

Figur 8c zeigt die Variante bei der das Abgas über eine Seitenfläche der Katalysatoreinrichtung 5 einströmt und auch über eine Seitenfläche der Katalysatoreinrichtung 5 wieder abströmt.

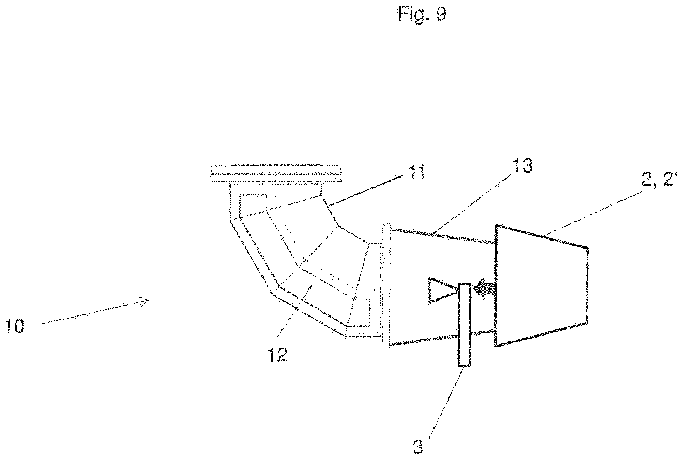

Figur 9 zeigt ein Detail der Abgasleitung 10 im Schnitt. Zu erkennen ist der gekrümmte Abschnitt 11 der Abgasleitung 10, in welchem eine Ablenkvorrichtung 12, hier als Prallblech ausgeführt, angeordnet ist. Im konischen Abschnitt 13 der Abgasleitung 10 nach dem Austritt der Abgase aus der Abgasturbine (2, 2') ist eine Eindüsvorrichtung 3 zur Eindüsung eines Reduktionsmittels angeordnet.

Die Ablenkvorrichtung 12 bewirkt ein besonders rasches Verdampfen des über die Eindüsvorrichtung 3 eingedüsten Reduktionsmittels. Weiters günstig ist es, dass die Ablenkvorrichtung 12einen Thermoschock durch das Aufprallen des relativ kühlen Reduktionsmittels auf die durch die Abgase aufgeheizte Abgasleitung 10 reduziert bzw. vermeidet.

Günstig in der gezeigten Anordnung ist auch, dass ein dem Abgasstrom durch die Abgasturbine 2, 2' aufgeprägter Restdrall die Vermischung des eingedüsten Reduktionsmittels und des Abgasstromes unterstützt.

### Liste der verwendeten Bezugszeichen:

- 1: Brennkraftmaschine
- 2, 2': Abgasturbine
- 3: Eindüsvorrichtung
- 4: Schalldämpfer
- 5: Katalysatoreinrichtung
- 6: Abgaswärmetauscher
- 7: Endschalldämpfer
- 8: Kamin
- 9: Steuer- / Regeleinrichtung
- 10: Abgasleitung
- 11: Gekrümmter Abschnitt der Abgasleitung
- 12: Ablenkvorrichtung, Prallblech
- 13: konischer Abschnitt der Abgasleitung
- 14: Sammelleitung
- 51: Katalysatorsubstrat
- 52: Gehäuse
- 53: Substratblock
- 54: formschlüssige Verbindung
- 55: Konsole
- 56: Rahmen
- 57: Koppelstelle

## Patentansprüche

1. Anordnung mit:
- wenigstens einer als Gasmotor ausgeführten stationären Brennkraftmaschine (1),
- wenigstens einer Katalysatoreinrichtung (5) zur Abgasnachbehandlung von nicht vorbehandelten Abgasen eines Abgasstromes der wenigstens einen Brennkraftmaschine (1), mit wenigstens einer Konsole (55) zur stehenden Montage der Katalysatoreinrichtung (5) auf einem Träger und wenigstens einem Katalysatorsubstrat (51), welches lösbar in einem Gehäuse (52) der Katalysatoreinrichtung (5) anordenbar ist, wobei das Katalysatorsubstrat (51) eine Zellendichte in cpsi von wenigstens 50 cpsi, vorzugsweise größer 100 cpsi, und kleiner als 350 cpsi, vorzugsweise kleiner als 300 cpsi, aufweist,
- wenigstens einer stromabwärts der Brennkraftmaschine (1) im Abgasstrom der Brennkraftmaschine (1) angeordneten Abgasturbine (2, 2'),
- wenigstens einer Eindüsvorrichtung (3) zum Eindüsen von Reduktionsmittel für die wenigstens eine Katalysatoreinrichtung (5), und
- einer Abgasleitung (10), in welcher der Abgasstrom führbar ist, welche Abgasleitung (10) zumindest einen sich stromabwärts aufweitenden konischen Abschnitt (13) aufweist,
wobei die wenigstens eine Eindüsvorrichtung (3) stromabwärts der wenigstens einen Abgasturbine (2, 2'), stromaufwärts der wenigstens einen Katalysatoreinrichtung (5) und stromaufwärts des wenigstens einen Schalldämpfers (4) im konischen Abschnitt (13) angeordnet ist, der Schalldämpfer (4) stromaufwärts der Katalysatoreinrichtung (5) angeordnet ist und der konische Abschnitt (13) unmittelbar stromabwärts der wenigstens einen Abgasturbine (2, 2') angeordnet ist.

2. Anordnung nach Anspruch 1, wobei die Eindüsvorrichtung (3) vorzugsweise als eine Zweistoff-Eindüsvorrichtung ausgebildet ist mit einem ersten Stoff in Form einer flüssigen Reduktionsmittellösung, bevorzugt einer Harnstofflösung, und einem zweiten Stoff in Form von Luft.

3. Anordnung nach Anspruch 1 oder 2, wobei zumindest zwei strömungstechnisch parallel angeordnete Abgasturbinen (2, 2') vorgesehen sind und die wenigstens eine Eindüsvorrichtung (3) im Abgasstrom einer Sammelleitung (14) stromabwärts der zumindest zwei Abgasturbinen (2, 2') angeordnet ist.

4. Anordnung nach Anspruch 1 oder 2, wobei zumindest zwei strömungstechnisch parallel angeordnete Abgasturbinen (2, 2') vorgesehen sind und entweder nur im Abgasstrom einer der Abgasturbinen (2, 2') eine Eindüsvorrichtung (3) angeordnet ist oder im Abgasstrom jeder der zumindest zwei Abgasturbinen (2, 2') jeweils zumindest eine Eindüsvorrichtung (3) angeordnet ist.

5. Anordnung nach wenigstens einem der Ansprüche 1 bis 4, wobei der Abgasstrom in einer Abgasleitung (10) führbar ist, welche zumindest einen gekrümmten Abschnitt (11) aufweist, wobei die wenigstens eine Eindüsvorrichtung (3) stromaufwärts des zumindest einen gekrümmten Abschnitts (11) der Abgasleitung (10) angeordnet ist.

6. Anordnung nach Anspruch 5, wobei im zumindest einen gekrümmten Abschnitt (11) eine Ablenkvorrichtung (12), vorzugsweise ein Prallblech, in einer Eindüsrichtung der Eindüsvorrichtung (3) angeordnet ist.

7. Anordnung nach wenigstens einem der Ansprüche 1 bis 6, wobei der Abgasstrom innerhalb des Gehäuses (52) umlenkbar ist, vorzugsweise um 180°.

8. Anordnung nach wenigstens einem der Ansprüche 1 bis 7, wobei die Eindüsvorrichtung in der Abgasleitung axial ausgerichtet und bevorzugt wenigstens annähernd mittig angeordnet ist.

9. Anordnung nach einem der Ansprüche 1 bis 8, wobei das Katalysatorsubstrat (51) zumindest vorwiegend, vorzugsweise vollständig, metallisch ist.

10. Anordnung nach einem der Ansprüche 1 bis 9, wobei das Katalysatorsubstrat (51) im Gehäuse (52) in Form einer Vielzahl von Substratblöcken (53) angeordnet ist.

11. Anordnung nach Anspruch 10, wobei die Substratblöcke (53) untereinander lösbar miteinander verbunden und zueinander gasdicht abgedichtet sind, vorzugsweise über formschlüssige Verbindungen (54).

12. Anordnung nach Anspruch 11, wobei die formschlüssigen Verbindungen (54) in Form von Verbindungsschienen ausgeführt sind, welche in einem im Gehäuse (52) der Katalysatoreinrichtung (5) angeordneten Rahmen (56) einhängbar sind.

13. Anordnung nach wenigstens einem der Ansprüche 10 bis 12, wobei die Substratblöcke (53) quaderförmig sind.

14. Anordnung nach wenigstens einem der Ansprüche 10 bis 13, wobei die Substratblöcke (53) zumindest jeweils eine Koppelstelle (57), vorzugsweise eine Ausnehmung, zur Ankopplung eines Hebemittels aufweisen.

15. Anordnung nach wenigstens einem der Ansprüche 1 bis 14, wobei die Katalysatoreinrichtung (5) als SCR-Katalysator, als Oxidationskatalysator oder als NH3-Schlupf-Katalysator ausgeführt ist.

## Claims

1. An arrangement comprising:
- at least one stationary internal combustion engine (1) in form of a gas engine,
- at least one catalytic converter device (5) for exhaust gas after-treatment of non pre-treated exhaust gases of an exhaust gas flow from the at least one internal combustion engine (1), comprising at least one brachet (55) for mounting the catalytic converter device (5) on a carrier and at least one catalyst substrate (51), which can be releasably arranged in a housing (52) of the catalytic converter device (5), wherein the catalyst substrate (51) has a cell density of at least 50 cpsi, preferably greater than 100 cpsi, and less than 350 cpsi, preferably less than 300 cpsi,
- at least one exhaust gas turbine (2, 2') arranged downstream of the internal combustion engine (1) in the exhaust gas flow from the internal combustion engine (1),
- at least one injection device (3) for the injection of reducing agent for the at least one catalytic converter device (5), and
- an exhaust gas conduit (10), in which the exhaust gas conduit (10) has at least one conical portion (13), which enlarges downstream,
wherein the at least one injection device (3) is arranged downstream of the at least one exhaust gas turbine (2, 2'), upstream of the at least one catalytic converter device (5) and upstream of the at least one muffler (4) in the conical portion (13), wherein the muffler (4) is arranged upstream of the catalytic converter device (5) and wherein the conical portion (13) is arranged immediately downstream of the at least one exhaust gas turbine (2, 2').

2. An arrangement as set forth in claim 1 wherein the at least one injection device (3) is preferably a two-component injection device with a first component in form of a liquid reduction agent solution, preferably a urea solution, and a second component in form of air.

3. An arrangement as set forth in at least one of the claims 1 or 2, wherein there are provided at least two exhaust gas turbines (2, 2') which are arranged in parallel fluidic relationship and the at least one injection device (3) is arranged in the exhaust gas flow of a manifold (14) downstream of the at least two exhaust gas turbines (2, 2').

4. An arrangement as set forth in at least one of the claims 1 or 2, wherein there are provided at least two exhaust gas turbines (2, 2') arranged in parallel fluidic relationship and either an injection device (3) is arranged only in the exhaust gas flow of one of the exhaust gas turbines (2, 2') or at least one respective injection device (3) is arranged in the exhaust gas flow of each of the at least two exhaust gas turbines (2, 2').

5. An arrangement as set forth in at least one of claims 1 through 4, wherein the exhaust gas flow can be guided in an exhaust gas conduit (10) having at least one curved portion (11), wherein the at least one injection device (3) is arranged upstream of the at least one curved portion (11) of the exhaust gas conduit (10).

6. An arrangement as set forth in claim 5, wherein arranged in the at least one curved portion (11) is a deflection device (12), preferably a baffle plate, in an injection means of the injection device (3).

7. An arrangement as set forth in at least one of claims 1 through 6, wherein the exhaust gas flow can be deflected within the housing (52), preferably through 180°.

8. An arrangement as set forth in at least one of claims 1 through 7, wherein the injection device is arranged inside the exhaust gas conduit aligned axially and preferably at least approximately centrally.

9. An arrangement as set forth in at least one of claims 1 through 8, wherein the catalyst substrate (51) is at least predominantly and preferably completely metallic.

10. An arrangement as set forth in at least one of claims 1 through 9, wherein catalyst substrate (51) is arranged in the housing (52) in the form of a plurality of substrate blocks (53).

11. An arrangement as set forth in claim 10, wherein the substrate blocks (53) are connected to each other releasably from each other and are gas-tightly sealed off relative to each other, preferably by way of positively locking connections (54).

12. An arrangement as set forth in claim 11, wherein the positively locking connections (54) are in form of connecting bars, which can be hung in a frame (56) disposed in the housing (52) of the catalytic converter device (5).

13. An arrangement as set forth in at least one of the claims 1 through 12, wherein the substrate blocks (53) are cuboidal.

14. An arrangement as set forth in at least one of the claims 1 through 13, wherein the substrate blocks (53) have at least one respective coupling location (57), preferably an opening for coupling a lifting means thereto.

15. An arrangement as set forth in at least one of the claims 1 through 14, wherein the catalytic converter device (5) is in form of an SCR catalytic converter, an oxidation catalytic converter or an NH3 slip catalytic converter.

## Revendications

1. Dispositif avec :
- au moins un moteur à combustion interne stationnaire (1) réalisé comme un moteur à gaz,
- au moins un dispositif catalyseur (5) pour le retraitement de gaz d'échappement, de gaz d'échappement non prétraités d'un flux de gaz d'échappement du au moins un moteur à combustion interne (1), avec au moins une console (55) pour le montage vertical du dispositif catalyseur (5) sur un support et au moins un substrat de catalyseur (51), lequel peut être disposé de façon détachable dans un boîtier (52) du dispositif catalyseur (5), dans lequel le substrat de catalyseur (51) présente une densité de cellule par pouce carré (cpsi) d'au moins 50 cpsi, de préférence supérieure à 100 cpsi, et inférieure à 350 cpsi, de préférence inférieure à 300 cpsi,
- au moins une turbine à gaz d'échappement (2, 2') disposée en aval du moteur à combustion interne (1) dans le flux de gaz d'échappement du moteur à combustion interne (1),
- au moins un dispositif d'injection (3) pour l'injection d'agent de réduction pour le au moins un dispositif catalyseur (5), et
- une conduite de gaz d'échappement (10), dans laquelle le flux de gaz d'échappement peut être guidé, ladite conduite (10) présentant au moins une section conique (13) s'élargissant en aval,
dans lequel le au moins un dispositif d'injection (3) est disposé en aval de la au moins une turbine à gaz d'échappement (2, 2'), en amont du au moins un dispositif catalyseur (5) et en amont du au moins un silencieux (4) dans une section conique (13), le silencieux (4) est disposé en amont du dispositif catalyseur (5) et la section conique (13) est disposée directement en aval de la au moins une turbine à gaz d'échappement (2, 2').

2. Dispositif selon la revendication 1, dans lequel le dispositif d'injection (3) est conçu de préférence comme un dispositif d'injection binaire avec une première matière sous forme d'une solution liquide d'agent de réduction, de préférence d'une solution d'urée, et une deuxième matière sous forme d'air.

3. Dispositif selon la revendication 1 ou 2, dans lequel sont prévues au moins deux turbines à gaz d'échappement (2, 2') disposées parallèlement en terme d'écoulement et le au moins un dispositif d'injection (3) est disposé dans le flux de gaz d'échappement d'une conduite collectrice (14) en aval des au moins deux turbines à gaz d'échappement (2, 2').

4. Dispositif selon la revendication 1 ou 2, dans lequel sont prévues au moins deux turbines à gaz d'échappement (2, 2') disposées parallèlement en terme d'écoulement et, soit un dispositif d'injection (3) est disposé uniquement dans le flux de gaz d'échappement d'une des turbines à gaz d'échappement (2, 2'), soit au moins un dispositif d'injection (3) est disposé à chaque fois dans le flux de gaz d'échappement de chacune des au moins deux turbines à gaz d'échappement (2, 2').

5. Dispositif selon au moins l'une des revendications 1 à 4, dans lequel le flux de gaz d'échappement peut être guidé dans une conduite de gaz d'échappement (10), laquelle présente au moins une section courbe (11), dans lequel le au moins un dispositif d'injection (3) est disposé en amont de la au moins une section courbe (11) de la conduite de gaz d'échappement (10).

6. Dispositif selon la revendication 5, dans lequel dans au moins une section courbe, un dispositif déflecteur (12), de préférence une chicane, est disposé dans un sens d'injection du dispositif d'injection (3).

7. Dispositif selon au moins l'une des revendications 1 à 6, dans lequel le flux de gaz d'échappement peut être détourné à l'intérieur du boîtier (52), de préférence à 180°.

8. Dispositif selon au moins l'une des revendications 1 à 7, dans lequel le dispositif d'injection est orienté axialement dans la conduite de gaz d'échappement et est disposé de préférence presque au milieu.

9. Dispositif selon l'une des revendications 1 à 8, dans lequel le substrat de catalyseur (51) est au moins surtout, de préférence entièrement, en métal.

10. Dispositif selon l'une des revendications 1 à 9, dans lequel le substrat de catalyseur (51) est disposé dans le boîtier (52) sous forme d'une pluralité de blocs de substrat (53).

11. Dispositif selon la revendication 10, dans lequel les blocs de substrat (53) sont reliés ensemble en étant mutuellement détachables et sont rendus étanches au gaz les uns par rapport aux autres, de préférence par des liaisons par engagement de forme (54).

12. Dispositif selon la revendication 11, dans lequel les liaisons par engagement de forme (54) sont réalisées sous forme de rails de liaison, lesquels peuvent être accrochés dans un cadre (56) disposé dans le boîtier (52) du dispositif catalyseur (5).

13. Dispositif selon au moins l'une des revendications 10 à 12, dans lequel les blocs de substrat (53) sont de forme parallélépipédique.

14. Dispositif selon au moins l'une des revendications 10 à 13, dans lequel les blocs de substrat (53) présentent au moins à chaque fois un point de couplage (57), de préférence un évidement, pour le couplage d'un moyen formant levier.

15. Dispositif selon au moins l'une des revendications 1 à 14, dans lequel le dispositif catalyseur (5) est réalisé comme un catalyseur de réduction sélective catalytique (SCR), comme un catalyseur d'oxydation ou comme un catalyseur à glissement de NH3.
